# EUROPÄISCHE PATENTSCHRIFT

(11) **EP 2 304 746 B1**
(45) Veröffentlichungstag und Bekanntmachung des Hinweises auf die Patenterteilung: **01.05.2013**
(21) Anmeldenummer: 10708958.3
(22) Anmeldetag: 22.02.2010
(51) Int. Cl.: H01F 41/02, B65G 57/30

(54) **VERFAHREN UND VORRICHTUNG ZUM STAPELN**
METHOD AND DEVICE FOR STACKING
PROCÉDÉ ET DISPOSITIF D'EMPILAGE

(30) Priorität: 06.03.2009 DE 102009011510
(43) Veröffentlichungstag der Anmeldung: 06.04.2011
(73) Patentinhaber: Grohmann Engineering GmbH, 54595 Prüm (DE)
(72) Erfinder: GROHMANN, Klaus, 54597 Hersdorf (DE); THOMMES, Lothar, 54634 Bitburg (DE)
(74) Vertreter: Kohlmann, Kai
(86) Internationale Anmeldenummer: PCT/EP2010/052210
(87) Internationale Veröffentlichungsnummer: WO 2010/100049

(56) Entgegenhaltungen:
- EP-A1- 1 108 663
- DE-A1- 2 537 410
- DE-B- 1 176 745

## Beschreibung

Die Erfindung betrifft eine Vorrichtung sowie ein Verfahren zum Stapeln lamellenartiger Produkte zu einem geraden, zylinderförmigen Stapel mit einer Ober- und einer Unterseite sowie mindestens zwei im Abstand zueinander angeordneten Seitenflächen. Der Stapel weist ferner eine Vorder- und eine Rückseite auf.

Derartige Stapelaufgaben übereinstimmender Produkte ergeben sich beispielsweise beim Zusammenfügen der Kernpakete von Transformatoren oder der Lamellen von Kopplungen.

Aus der EP 1 108 663 A1, die den Oberbegriff der Ansprüche 1 und 13 offenbart, ist ein Magazin zum Lagern von Chip-karten bekannt, welches Mittel zum vertikalen Stapeln der Chipkarten umfasst, wobei dieses Mittel zwei vertikale Zahnriemen mit nach außen weisenden Zähnen aufweist. Der Abstand zwischen den beiden Riemen ist größer als die Breite der Chipkarten, so dass diese ausschließlich auf den gegenüberliegenden Zähnen der Riemen aufliegen. Die Zahnteilung in den beiden vertikalen Zahnrienen definiert die Höhe eines Entgasungsvolumens zwischen zwei aufeinanderfolgend von den Zahnriemen aufgenommenen Chipkarten. Die Chipkarten werden von unten mit Hilfe eines von einem Kolben angetriebenen Trägers zwischen die Riemen gesteckt, um oberhalb der Riemen in einem Lagerbereich einen Stapel der Chipkarten zu bilden. Mit Hilfe der Zahnriemen werden die Chipkarten in dem Lagerbereich von unten gestapelt, wobei ein wesentlicher Unterschied zwischen dem Lagerbereich und dem darunter befindlichen Entgasungsbereich darin besteht, dass das Entgasungsvolumen, das im Entgasungsbereich zwischen zwei aufeinander folgenden Chipkarten vorhanden ist, im Lagerbereich entfällt. Die beiden Zahnriemen sind über einen Riemen synchronisiert, der über eine freilaufende Scheibe mit einer Rückschlagsicherung läuft. Die Rückschlagsicherung bewirkt, dass sich die Scheibe nur in einer Richtung drehen kann.

Die Aufgabe der Erfindung besteht, darin, bereits beim Stapeln eine gewünschte Vorspannung in dem Stapel zu erzeugen, die auch beim Hinzufügen einzelner Produkte aufrechterhalten werden kann. Der vorgespannte Stapel soll mit einer Entnahmevorrichtung unter Aufrechterhaltung der Vorspannung aus der Vorrichtung entnehmbar sein.

Die vorstehende Aufgabe wird verfahrensmäßig dadurch gelöst, dass die lamellenartigen Produkte entgegen der Schwerkraft von unten nach oben in ein Stapelnest gehoben werden, dass die Produkte unter Kraftbeaufschlagung zumindest auf die Seitenflächen des Stapels gegen ein Absacken in Richtung der Schwerkraft in dem Stapelnest gehalten werden, wobei die Kraftbeaufschlagung auf die Seitenflächen in dem Stapel quer zur Richtung der Schwerkraft eine Vorspannung erzeugt, die den Stapel auch beim Hinzufügen weiterer Produkte zusammenhält, und unter Aufrechterhaltung der Kraftbeaufschlagung weitere Produkte von der Unterseite dem Stapel in dem Stapelnest mittels einer Hubeinrichtung hinzugefügt werden.

Die Kraftbeaufschlagung auf die Seitenflächen der Produkte erzeugt in dem im Wesentlichen senkrechten Stapel quer zur Richtung der Schwerkraft eine Vorspannung, die den Stapel auch beim Hinzufügen weiterer Produkte zusammenhält.

Dem Stapelnest werden weitere Produkte ausschließlich von der Unterseite hinzugefügt.

Zusätlich kann insbesondere mit Hilfe eines Sperrelementes nach Art einer Sperrklinke eine Haltekraft auf die Unterseite des Stapels ausgeübt werden, um ein Absacken des Stapels in dem Stapelnest zu verhindern. Die zusätzliche Haltekraft ist insbesondere dann erforderlich, wenn die Kraftbeaufschlagung auf die Seitenflächen nicht ausreicht, um ein Absacken des Stapels während des gesamten Stapelvorgangs sicher zu verhindern.

Bei dem Hinzufügen weiterer Produkte werden die lamellenartigen Produkte aufgrund ihrer elastischen Eigenschaften geringfügig gestaucht, wodurch in dem Stapel in vertikaler Richtung eine Vorspannung aufgebaut wird. Die Kraftbeaufschlagung auf die Seitenflächen der Produkte in dem Stapel wird beim Hinzufügen weiterer Produkte aufrechterhalten. Die Gegenkraft zum Aufbau der Vorspannung in vertikaler Richtung resultiert aus dem Eigengewicht der bereits im Stapelnest enthaltenen Produkte und wird insbesondere zusätzlich dadurch erhöht, dass auf den Stapel von seiner Oberseite mit einer Gegenhalteeinheit eine zusätzliche Kraft ausgeübt wird. Diese Kraft kann während des Stapelvorgangs abhängig von der Stapelhöhe fortlaufend verändert werden (z. B. durch Gewichtsbelastung mit 20, 40, 60, 80 kg).

Die Produkte werden dem Stapelnest mittels einer Hubeinrichtung hinzugefügt, die die Produkte aus einer unterhalb der Unterseite des Stapels angeordneten Produktaufnahme übernimmt und bis an die Unterseite des Stapels in dem Stapelnest anhebt. Die Produktaufnahme kann beispielsweise als Drehtisch ausgeführt sein, an dessen Umfang Produktnester für die lamellenartigen Produkte angeordnet sind. Jedes Produktnest trägt mindestens ein hinzuzufügendes lamellenartiges Produkt. Es ist jedoch auch möglich, dass die Hubeinrichtung gleichzeitig mehrere Produkte aus dem Produktnest der Produktaufnahme übernimmt und in das Stapelnest anhebt.

Sobald der Stapel die gewünschte Höhe erreicht hat, wird der Stapel mit einer Entnahmevorrichtung aus dem Stapelnest entnommen. Die Entnahmevorrichtung ist beispielsweise als c-förmiger Rahmen ausgeführt. Die freien horizontalen Schenkel des Rahmens werden an der Ober- und Unterseite des Stapels zur Anlage gebracht. Anschließend wird die Kraftbeaufschlagung auf die Seitenflächen des Stapels und ggf. durch den Gegenhalter zeitweilig aufgehoben. Nun kann die Entnahmevorrichtung den in dem Rahmen weiterhin unter Kompressionen stehenden Stapel aus dem Stapelnest entfernen. Das Stapelnest steht für neue Stapelaufgaben zur Verfügung.

Eine Vorrichtung zum automatisierten Stapeln lamellenartiger Produkte gemäß dem erfindungsgemäßen Verfahren ist gekennzeichnet durch mindestens ein an jeder Seitenfläche des Stapels zur Anlage bringbares, zwischen einer unteren und einer oberen Umlenkung umlaufendes Zugmittel eines Zugmitteltriebs, wobei der Zugmitteltrieb einen Freilauf aufweist, der als Rücklaufsperre eine Abwärtsbewegung des an dem Stapel anliegenden Zugmittels unterbindet, eine in vertikaler Richtung bewegliche, auf der Oberseite des Stapels zur Anlage bringbare Gegenhalteeinheit sowie eine in vertikaler Richtung zur Unterseite des Stapels verfahrbare Hubeinrichtung für mindestens ein lamellenartiges Produkt, die zwischen einer unterhalb der unteren Umlenkung jedes Zugmitteltriebs befindlichen Übernahmeposition und einer darüber liegenden Übergabeposition verfahrbar ist.

Das Stapelnest der Vorrichtung wird durch die mindestens zwei symmetrisch angeordneten Zugmitteltriebe gebildet, wobei als Zugmittel insbesondere Transportbänder oder -ketten in Betracht kommen. Jeder Zugmitteltrieb weist einen Freilauf auf, der derart richtungsgeschaltet ist, dass die zu stapelnden Produkte nach den Anheben in das Produktnest in Position gehalten und ein Absacken des Stapels nach dem Aufwärtshub der Hubeinrichtung verhindert wird.

Um ein Absacken des Stapels in dem Stapelnest bei nicht ausreichender Kraftbeaufschlagung auf die Seitenflächen zu verhindern, kann die Vorrichtung mindestens ein um eine Achse drehbares Sperrelement mit einer Anschlagfläche aufweisen, die zeitweilig randseitig an der Unterseite des Stapels zur Anlage bringbar ist. Das Sperrelement untergreift mit der Anschlagfläche den Rand des Stapels an dessen Unterseite. Das vorzugsweise federbelastete Sperrelement schwenkt beim Hinzufügen weiterer Produkte kurzfristig weg und gibt die Unterseite des Stapels frei. Sobald ein weiters Produkt dem Stapel hinzugefügt wurde, schnappt das Sperrelement aufgrund der Federbelastung zurück und die Anschlagsfläche gelangt wieder unter den unteren Rand des Stapels.

Die Gegenhalteeinheit ist auf der Oberseite des Stapels zur Anlage bringbar, um von unten nach oben eine Kraft in dem Stapel aufzubringen.

Die Hubeinrichtung weist vorzugsweise eine Auflageplatte auf, die parallel zur Unterseite des Stapels ausgerichtet und zwischen einer unterhalb der unteren Umlenkung der Zugmitteltriebe befindlichen Übernahmeposition und einer darüber liegenden Übergabeposition verfahrbar ist. In der Übernahmeposition werden die von der Unterseite dem Stapel hinzuzufügenden Produkte beispielsweise aus dem Formnest des Drehtisches übernommen und in der Übergabeposition dem Stapel von der Unterseite hinzugefügt. Beim Hinzufügen gelangen die Seitenränder des Produktes, die die Seitenflächen des Stapels bilden, zwischen die symmetrisch entlang der Seitenflächen angeordneten Zugmitteltriebe.

Um die Reibung des Stapels in dem Stapelnest beim Aufwärtshub der Hubeinrichtung zu mindern, können entlang der Berührflächen von Stapel und Zugmittel Stützrollen für das umlaufende Zugmittel angeordnet sein.

Die insbesondere an einer Linearführung angeordnete, vertikal bewegliche Gegenhalteeinheit kann zur Erzeugung der

Gegenkraft gewichtsbelastet sein. Die Gegenkraft kann abhängig von der Stapelhöhe durch Auflegen weiterer Gewichte gesteigert werden. Alternativ oder zusätzlich kann die Gegenhalteeinheit in einer vorteilhaften Ausgestaltung der Erfindung von einer Antriebseinheit in Richtung der Oberseite des Stapels mit Kraft beaufschlagt sein. Als Antriebseinheit kommt beispielsweise ein druckmittelbetriebener Zylinder in Betracht.

Um die Kraftbeaufschlagung auf die Seitenflächen des Stapels zu verändern oder zeitweilig ganz aufzuheben, sind zumindest auf einer Seite des Stapels sämtliche Zugmitteltriebe mit Mitteln zum Aufbau einer Anpresskraft des Zugmittels an der Seitenfläche des Stapels versehen. Vorzugsweise sind jedoch sämtliche Zugmitteltriebe mit derartigen Mitteln ausgestattet. Als Mittel zum Aufbau einer Anpresskraft kommen insbesondere im Bereich der Umlenkungen des Zugmitteltriebes horizontal angeordnete, druckmittelbetriebene Zylinder in Betracht. Mit den Zylindern lassen sich variable Anpressdrücke des Zugmittels entlang der Berührfläche zwischen Zugmittel und Stapel erzeugen.

Um mit der Entnahmevorrichtung nach Beendigung des Stapelvorgangs den Stapel problemlos von der Vorderseite des Stapels aus dem Stapelnest entnehmen zu können, sind zumindest auf einer Seite des Stapels sämtliche Zugmitteltriebe von der Seitenfläche des Stapels weg bewegbar. Diese Bewegung kann, einen entsprechenden Hub der Zylinder zur Erzeugung der Anpresskraft vorausgesetzt, von diesen Zylindern erzeugt werden. Vorzugsweise sind die Zugmitteltriebe zu beiden Seiten des Stapels beispielsweise durch eine Schwenkbewegung abrückbar ausgestaltet.

Die Gegenhalteeinheit umfasst eine Platte, die flächig auf der Oberseite des Stapels aufliegt. Hierdurch wird eine gleichmäßige Krafteinleitung in den Stapel gewährleistet. Die Platte ist mittig von der Vorderseite des Stapels aus gesehen mit einer Aussparung für den Eingriff eines Schenkels der c-förmigen Entnahmevorrichtung vorgesehen. Der Schenkel greift in die Aussparung ein und übernimmt mit dem gegenüberliegenden, auf der Unterseite des Stapels anliegenden Schenkel die Kompression des fertigen Stapels. Zur Aufhebung der Kraftbeaufschlagung durch die Gegenhalteeinheit wird diese in vertikaler Richtung von der Oberseite des Stapels in eine Endstellung verfahren. Des Weiteren werden die Zugmitteltriebe von den Seitenflächen des Stapels abgerückt.

Un die Führung des Stapels während des Stapelvorgangs unter Kompression zu verbessern, können in einer Ausgestaltung der Erfindung zusätzlich zu den beidseitig angeordneten Zugmitteltrieben Führungsmittel, insbesondere in Form von Führungsstangen, zur Führung des Stapels zumindest an seiner Rückseite angeordnet sein.

Nachfolgend wird die Erfindung anhand der Figuren näher erläutert. Es zeigen:
- **Figur 1**: eine schematische Aufsicht auf eine erfindungsgemäße Vorrichtung im Schnitt
- **Figur 2**: eine schematische Vorderansicht der Vorrichtung ohne Hubeinrichtung sowie
- **Figur 3**: einen schematischen Schnitt durch die Vorrichtung jedoch mit Darstellung der Hubeinrichtung,
- **Figur 4**: eine Vorderansicht eines Ausführungsbeispiels einer erfindungsgemäßen Vorrichtung,

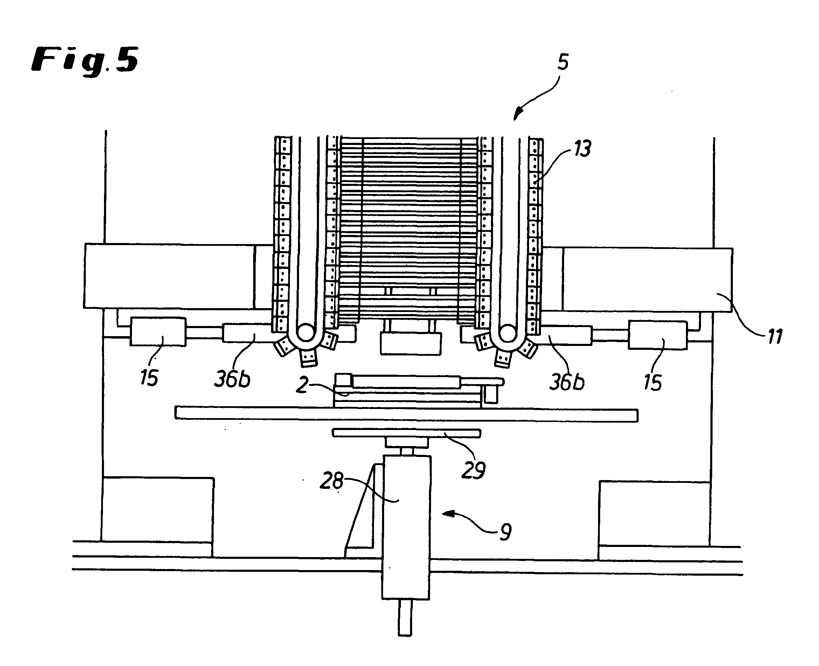

- **Figur 5**: eine Detailansicht der Anordnung der Hubeinrichtung sowie
- **Figur 6**: eine Detailansicht eines Sperrelementes für eine erfindungsgemäße Vorrichtung.

Die Vorrichtung (1) zum Stapeln lamellenartiger Produkte (2) zu einem geraden, zylinderförmigen Stapel (3) besteht im Wesentlichen aus einem an jeder .Seitenfläche (4) des Stapels (3) zur Anlage bringbaren Zugmitteltriebe (5), einer in vertikaler Richtung beweglichen, auf der Oberseite (6) des Stapels (3) zur Anlage bringbaren Gegenhalteeinheit (7) sowie einer in vertikaler Richtung zur Unterseite (8) des Stapels (3) verfahrbaren Hubeinrichtung (9).

Ferner ist zwischen der Hubeinrichtung (9) und der Unterseite (8) des Stapels (3) ein Drehtisch (10) angeordnet, der die Produkte zur Übergabe an die Hubeinrichtung (9) bereithält.

Ferner besitzt die Vorrichtung einen Rahmen (11) zur Aufnahme der Zugmitteltriebe (5), der Führungen sowie der Gegenhalteeinheit (7) einschließlich deren Führungselementen.

Das Stapelnest für den Stapel (3) wird von den beiden symmetrisch angeordneten Zugmitteltrieben (5) gebildet. Jeder Zugmitteltriebe (5) weist als Zugmittel ein Transportband (12) auf, das zwischen einer unteren und einer oberen Umlenkrolle (13 a, b) umläuft. Die Umlenkrollen (13 a, b) weisen einen Freilauf (14) auf, der als Rücklaufsperre eine Abwärtsbewegung des an dem Stapel (3) anliegenden Transportbandes (12) unterbindet.

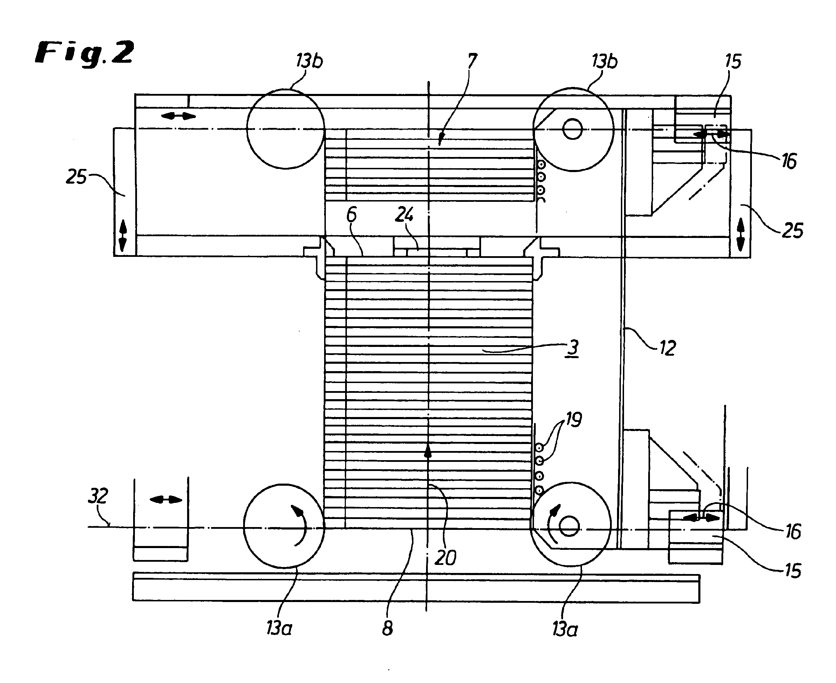

Die Zugmitteltrieb (5) sind auf Höhe der oberen und unteren Umlenkrolle (13 a, b) jeweils durch einen Querhub-Zylinder (15) an dem Rahmen (11) der Vorrichtung angeschlagen. Die Querhub-Zylinder (15) haben die Funktion, einen variablen Anpressdruck des Transportbandes (12) entlang der Berührfläche zum Stapel (3) zu erzeugen. Die synchron betätigbaren Querhub-Zylinder (15) erlauben aufgrund ihres Verstellweges (16) ein vollständiges Abrücken des Zugmitteltriebs (5) von den Seitenflächen (4) des Stapels (3). Die beiden Transportbänder (12) dienen gemeinsam mit den beiden an der Rückseite des Stapels (3) anliegenden Führungsstangen (18) der Führung des Stapels (3) während des Stapelvorgangs. Entlang der Berührflächen zwischen Stapel (3) und Transportband (12) sind, wie insbesondere in Figur 2 angedeutet, Stützrollen (19) angebracht. Diese freilaufenden Stützrollen (19) dienen dazu, die Reibung beim Aufwärtshub des Stapels in Richtung des Pfeils (20) zu mindern. Beim Aufwärtshub werden die lamellenartigen Produkte geringfügig gestaucht, wodurch in dem Stapel in vertikaler Richtung eine Vorspannung aufgebaut wird. Dabei kommt es zu einer geringfügigen Relativbewegung zwischen den Seitenrändern der Produkte (2) und den anliegenden Transportbändern (12) der Produkte, die durch die Stützrollen besser kontrollierbar ist. Des Weiteren tragen die Stützrollen zu einer geradlinigen Führung des Stapels (3) in vertikaler Richtung während des Stapelvorgangs bei.

Die Gegenhalteeinheit (7) umfasst einen an einer Gleitführung (21) geführten Block (22), an dem eine Gegenhalteplatte (23) befestigt ist, die auf der Oberseite (6) des Stapels (3) während des Stapelvorgangs aufliegt. Wie aus Figur 2 schematisch erkennbar, weist die Gegenhalteplatte (23) an ihrer Vorderseite eine Aussparung (24) auf, um die Entnahme des Stapels (3) nach Erreichen von dessen Soll-Höhe mit einer Entnahmevorrichtung zu ermöglichen.

Die Gegenhalteeinheit (7) belastet den Stapel nit einer Kraft, die aus ihrem Gewicht und einem insbesondere druckmittelbetriebenen Zylinder (25) resultiert. Um die Kraftbeaufschlagung durch die Gegenhalteeinheit (7) nach Beendigung des Stapelvorgangs zeitweilig aufzuheben, wird die Gegenhalteeinheit (7) mit dem Zylinder (25) in eine obere Endstellung in Richtung des Pfeils (26) verfahren.

Die Hubeinrichtung (9) besteht im Wesentlichen aus einem in z-Richtung (27) verfahrbaren Hubzylinder (28), an dessen Kolbenstange eine Druckplatte (29) befestigt ist. Zwischen der unteren Umlenkrolle (13 a) und der abgesenkten Druckplatte (29) ist der um eine Achse (30) drehbar gelagerte Drehtisch (10) angeordnet. Am äußeren Umfang des Drehtisches (10) sind mehrere Produktnester (31) angeordnet, die beispielsweise als Durchgänge mit einem umlaufenden Rand ausgerührt sein können, auf dem die lamellenartigen Produkte (2) randseitig aufliegen. Vorzugsweise sind die Produktnester (31) als austauschbare Einsätze in dem Drehtisch (10) ausgeführt, so dass sie an unterschiedliche Produkte (2) angepasst werden können. Der Durchgang in jedem Produktnest (31) ist so groß, dass die Druckplatte (29) ihn ungehindert passieren kann. Dies erlaubt es, dass die Druckplatte (29) während ihrer Aufwärtsbewegung in z-Richtung (27) zunächst die zu stapelnden Produkte (2) bzw. das zu stapelnde Produkt (2) aus dem Produktnest (31) übernimmt und dies(e) bei Erreichen des Stapelniveaus (32) der Unterseite (8) des Stapels (3) hinzufügt. Das Stapelniveau (32) befindet sich auf Höhe der Achsen der unteren Umlenkrollen (13 a). Bei Erreichen des Stapelniveaus (32) gelangen die seitlichen Ränder der Produkte (2) zwischen die Transportbänder (12) der gegenüberliegenden Zugmitteltriebe (5).

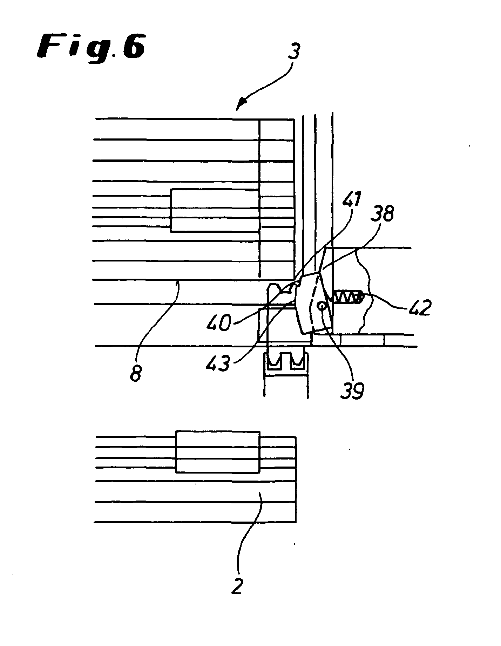

Um ein Absacken des Stapels (3) in dem Stapelnest, insbesondere bei nicht ausreichender Kraftbeaufschlagung auf die Seitenflächen durch die Transportbänder (12) zu verhindern, kann die Vorrichtung (1) mindestens ein um eine Achse (39) drehbares Sperrelement (38) mit einer Anschlagfläche (40) aufweisen, die zeitweilig randseitig an der Unterseite (8) des Stapels (3) zur Anlage bringbar ist (vgl. Figur 6). Das Sperrelement (38) untergreift mit der Anschlagfläche (40) den Rand (41) des Stapels (3) an dessen Unterseite (8). Die dem Stapel (3) hinzuzufügenden Produkte (2) gleiten mit ihrem hinteren, den Führungsstäben (34) zugewandeten Rand -ängs einer Gleitfläche (43) des Sperrelementes (38). Das durch eine Druckfeder (43) belastete Sperrelement (38)schwenkt dadurch beim Hinzufügen weiterer Produkte (2) kurzfristig im Uhrzeigersinn um die Achse (39) und gibt die Unterseite (8) des Stapels frei. Sobald die weiteren Produkte (2) dem Stapel (3) hinzugefügt wurden, schnappt das Sperrelement (38) aufgrund der Federbelastung zurück und die Anschlagfläche (40) gelangt wieder unter den unteren Rand (41) des Stapels.

Nach Beendigung des Stapelvorgangs in einer Stapelhöhe H wird der Stapel (3) über eine nicht dargestellte Entnahmevorrichtung entnommen. Die Entnahmevorrichtung ist insbesondere als c-förmiger Rahmen ausgeführt. Der c-förmige Rahmen übernimmt von der Vorderseite den Stapel (3) aus dem Stapelnest. Ein Schenkel untergreift dabei die Unterseite (8) des Stapels (3), während der andere freie Schenkel des c-förmigen Rahmens der Entnahmevorrichtung in die Aussparung (24) der Gegenhalteplatte (23) eingreift und damit auf der Oberseite (6) des Stapels zur Anlage gelangt. Von dem derart fixierten Stapel (3) wird anschließend die Gegenhalteplatte (23) mit Hilfe des Zylinders (25) in die obere Endstellung bewegt. Außerdem werden mittels der Querhub-Zylinder (15) die an der linken und rechten Seitenfläche (4) anliegenden Zugmitteltriebe (5) von dem Stapel (3) abgerückt, um das Ausfahren des in dem c-förmigen Rahmen weiterhin unter Kompression stehenden Stapels (3) aus dem Stapelnest zu ermöglichen. Das Stapelnest steht nunmehr für eine weitere Stapelaufgabe zur Verfügung.

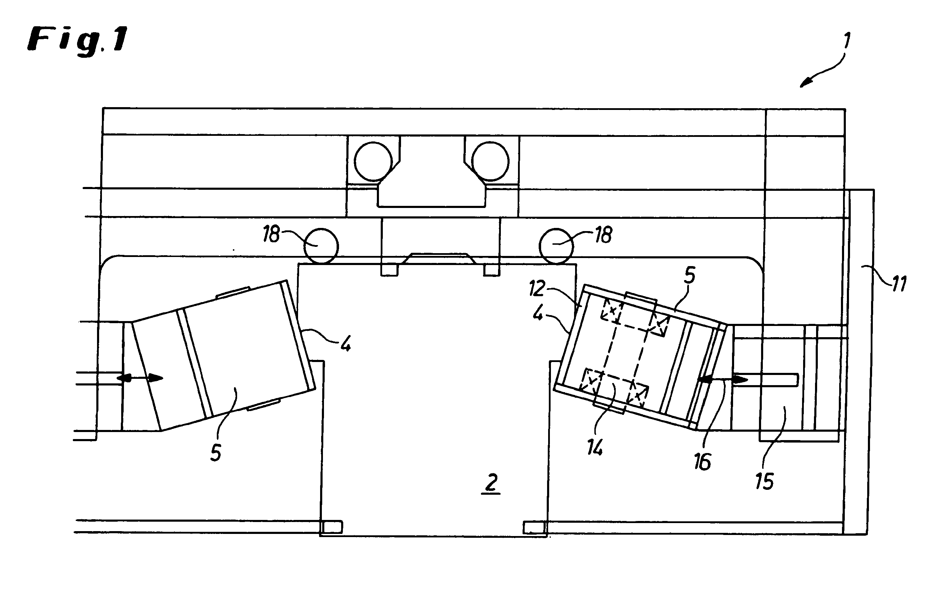

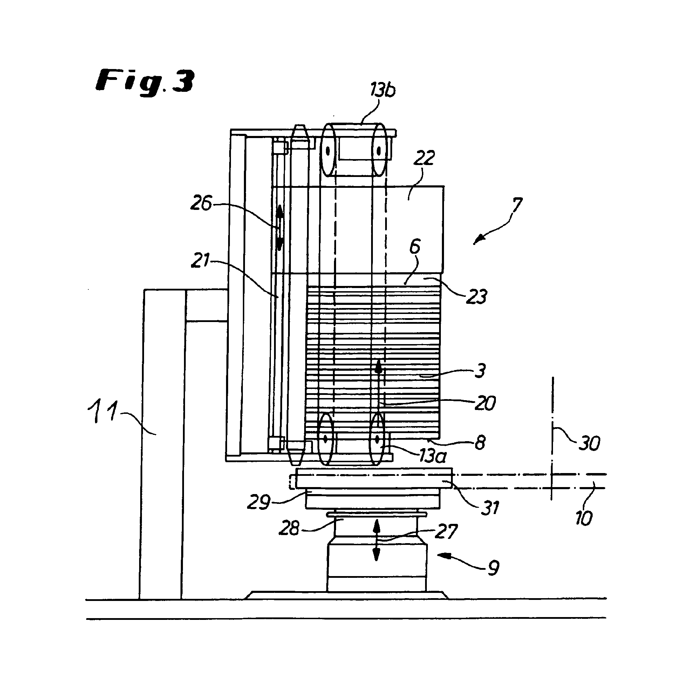

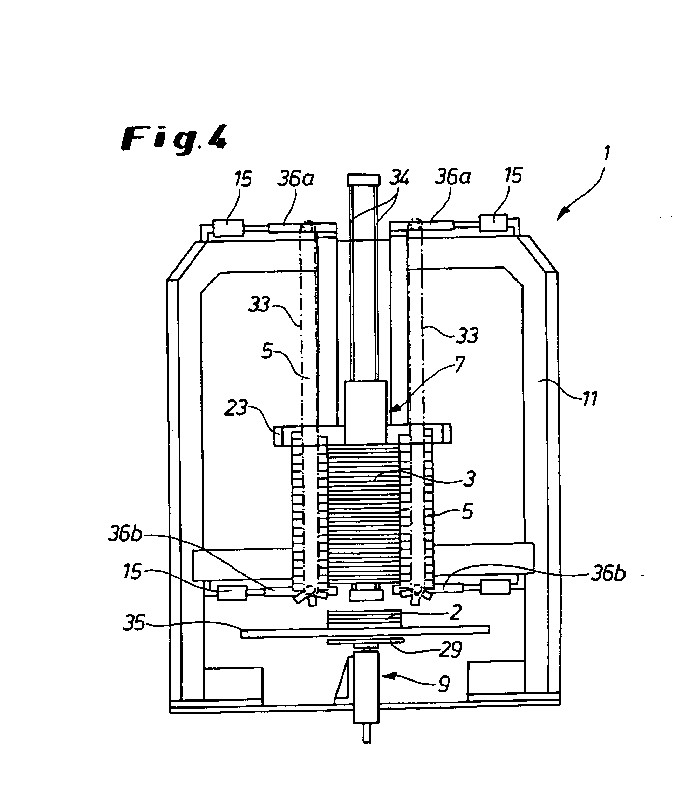

Figur 4 zeigt eine detailliertere Darstellung einer erfindungsgemäßen Vorrichtung (1) zum Stapeln lamellenartiger Produkte (2). Abweichend zu der Vorrichtung nach den Figuren 1 - 3 weist der Zugmitteltriebe (5) kein Transportband, sondern eine segmentierte Kette (33) auf. Figur 4 zeigt den Stapel (3) kurz vor dem Hinzufügen mehrerer lamellenartiger Produkte (2) von unten in das Stapelnest. Der Stapel (3) ist an einem Absacken in Richtung der Schwerkraft durch die beidseitig an den Seitenflächen (4) anliegenden Ketten (33) gehindert, die Bestandteil von Zugmitteltrieben (5) mit einem Freilauf sind. Aus Figur 4 ist erkennbar, dass die an den beiden Führungsstäben (34) geführte Gegenhalteeinheit (7) mit ihrer Gegenhalteplatte (23) bündig auf der Oberseite (6) des Stapels (3) aufliegt.

Mit dem Anheben der Druckplatte (29) werden die Produkte (2) von der Produktaufnahme (35) abgehoben und von unten gegen den im Stapelnest gehaltenen Stapel (3) gedrückt, wodurch der zwischen den beiden Zugmitteltrieben (5) befindliche Stapel (3) nach oben gedrückt und komprimiert wird. Die erforderliche Gegenkraft für die Kompression des Stapels wird einerseits durch das Eigengewicht des Stapels (3) und andererseits durch die Gegenhalteeinheit (7) ausgeübt. Die Querhub-Zylinder (15) greifen bei dieser Ausführungsform der erfindungsgemäßen Vorrichtung jeweils an einem an dem Rahmen (11) um eine senkrechte Achse in einer horizontalen Ebene schwenkbaren Tragarm (36 a, b) an, wobei an dem oberen Tragarm (36 a) die oberen und an dem unteren Tragarm (36 b) die unteren Zahnräder des Zugmitteltriebs (5) für die Umlenkung der sagmantierten Kette (33) angeordnet sind.

Um die an den Seitenflächen (4) anliegenden Zugmitteltriebe (5) außer Wirkung zu bringen, werden die Tragarme (36 a, b) zu beiden Seiten mittels des Querhub-Zylinders (15) um die rahmenfeste Schwenkachse weggeschwenkt.

### Bezugszeichenliste

| **Nr.** | **Bezeichnung** | **Nr.** | **Bezeichnung** |
|---|---|---|---|
| 1 | Vorrichtung | 29 | Druckplatte |
| 2 | Produkte | 30 | Drehachse |
| 3 | Stapel | 31 | Produktnester |
| 4 | Seitenfläche | 32 | Stapelniveau |
| 5 | Zugmitteltriebe | 33 | Kette |
| 6 | Oberseite | 34 | Führungsstäbe |
| 7 | Gegenhalteeinheit | 35 | Produktaufnahme |
| 8 | Unterseite | 36 a, b | Tragarm |
| 9 | Hubeinrichtung | 37 a, b | Zahnräder |
| 10 | Drehtisch | 38 | Sperrelement |
| 11 | Rahmen | 39 | Achse |
| 12 | Transportband | 40 | Anschlagfläche |
| 13 a, b | Umlenkrolle | 41 | Rand |
| 14 | Freilauf | 42 | Druckfeder |
| 15 | Querhub-Zylinder | 43 | Gleitfläche |
| 16 | Verstellweg | 44 | |
| | Rückseite | 45 | |
| 18 | Führungsstangen | 46 | |
| 19 | Stützrollen | 47 | |
| 20 | Aufwärtshub | 48 | |
| 21 | Gleitführung | 49 | |
| 22 | Block | 50 | |
| 23 | Gegenhalteplatte | 51 | |
| 24 | Aussparung | 52 | |
| 25 | Zylinder | 53 | |
| 26 | Pfeils | 54 | |
| 27 | Z-Richtung | 55 | |
| 28 | Hubzylinder | 56 | |

## Patentansprüche

1. Vorrichtung zum Stapeln lamellenartiger Produkte zu einem geraden, zylinderförmigen Stapel mit einer Ober- und einer Unterseite sowie mindestens zwei im Abstand zueinander angeordneten Seitenflächen,
- mit mindestens einem an jeder Seitenfläche (4) des Stapels (3) zur Anlage bringbaren, zwischen einer unteren und einer oberen Umlenkung (13 a, b) umlaufenden Zugmittel (12) eines Zugmitteltriebs (5),
- wobei jeder Zugmitteltrieb (5) eine Rücklaufsperre aufweist, die eine Abwärtsbewegung des an dem Stapel (3) anliegenden Zugmittels unterbindet,
- mit einer in Richtung der Unterseite (8) des Stapels (3) verfahrbaren Hubeinrichtung (9) für mindestens ein lamellenartiges Produkt (2), die zwischen einer unterhalb der unteren Umlenkung (13 a) jedes Zugmitteltriebs (5) befindlichen Übernahmeposition und einer darüber liegenden Übergabeposition (32) verfahrbar ist,
**gekennzeichnet, durch** eine bewegliche, auf der Oberseite (6) des Stapels (3) zur Anlage bringbare Gegenhalteeinheit (7).

2. Vorrichtung nach Anspruch 1, **dadurch gekennzeichnet, dass** jeder Zugmitteltrieb (5) Stützrollen (19) für das umlaufende Zugmittel (12) aufweist.

3. Vorrichtung nach Anspruch 1 oder 2, **dadurch gekennzeichnet, dass** jeder Zugmitteltrieb (5) als Zugmittel ein Transportband (12) aufweist.

4. Vorrichtung nach Anspruch 1 oder 2, **dadurch gekennzeichnet, dass** jeder Zugmitteltrieb (5) als Zugmittel eine Kette (33) aufweist.

5. Vorrichtung nach einem der Ansprüche 1 bis 4, **dadurch gekennzeichnet, dass** die Gegenhalteeinheit (7) gewichtsbelastet ist.

6. Verrichtung nach einem der Ansprüche 1 bis 5, **dadurch gekennzeichnet, dass** die Gegenhalteinheit (7) mit einem Antrieb (25) zumindest zur Kraftbeaufschlagung der Oberseite (6) des Stapels (3) verbunden ist.

7. Vorrichtung nach einem der Ansprüche 1 bis 6, **dadurch gekennzeichnet, dass** zumindest jeder Zugmitteltrieb (5) auf einer der beiden Seitenflächen (4) des Stapels (3) mit Mitteln zum Aufbau einer Anpresskraft (15) des Zugmittels (12) an der Seitenfläche (4) des Stapels (3) versehen ist.

8. Vorrichtung nach einem der Ansprüche 1 bis 7, **dadurch gekennzeichnet, dass** zumindest jeder Zugmitteltrieb (5) auf einer der beiden Seitenflächen (4) des Stapels (3) vollständig von dem Stapel (3) abrückbar ist.

9. Vorrichtung nach einem der Ansprüche 1 bis 8, **dadurch gekennzeichnet, dass** die Gegenhalteinheit (7) eine Platte (23) mit einer Aussparung (24) für den Eingriff eines Arms einer Entnahmevorrichtung aufweist.

10. Vorrichtung nach einem der Ansprüche 1 bis 9, **dadurch gekennzeichnet, dass** die Vorrichtung (1) Führungsmittel (18) zur Führung des Stapels (3) zumindest an dessen Rückseite aufweist.

11. Vorrichtung nach einem der Ansprüche 1 bis 10, **dadurch gekennzeichnet, dass** die Führungsmittel als Stangen (18) ausgestaltet sind.

12. Vorrichtung nach einem der Ansprüche 1 bis 10, **dadurch gekennzeichnet, dass** die Vorrichtung mindestens ein um eine Achse (39) drehbares Sperrelement (38) mit einer Anschlagfläche (40) aufweist, die zeitweilig randseitig an der Unterseite (8) des Stapels zur Anlage bringbar ist.

13. Verfahren zum Stapeln lamellenartiger Produkte (2) zu einem geraden, zylinderförmigen Stapel (3) mit einer Ober- und einer Unterseite sowie mindestens zwei im Abstand zueinander angeordneten Seitenflächen (4), wobei die lamellenartigen Produkte (2) entgegen der Schwerkraft von unten nach oben in einen Stapel (3) in einem Stapelnest gehoben werden, **dadurch gekennzeichnet,**
- **dass** die Produkte (2) unter Kraftbeaufschlagung zumindest auf die Seitenflächen (4) des Stapels (3) gegen ein Absacken in Richtung der Schwerkraft in dem Stapelnest gehalten werden, wobei die Kraftbeaufschlagung auf die Seitenflächen (4) in dem Stapel quer zur Richtung der Schwerkraft eine Vorspannung erzeugt, die den Stapel (3) auch beim Hinzufügen weiterer Produkte (2) zusammenhält,
- und unter Aufrechterhaltung der Kraftbeaufschlagung weitere Produkte (2) von der Unterseite dem Stapel (3) in dem Stapelnest mittels einer Hubeinrichtung (9) hinzugefügt werden.

14. Verfahren nach Anspruch 13, **dadurch gekennzeichnet, dass** der Stapel (3) von seiner Oberseite (6) mit einer Gegenhalteeinheit (7) kraftbeaufschlagt wird.

15. Verfahren nach Anspruch 13 oder 14, **dadurch gekennzeichnet, dass** die Produkte (2) mittels einer Hubeinrichtung (9) in das Stapelnest gehoben werden.

16. Verfahren nach einem der Ansprüche 13 bis 15, **dadurch gekennzeichnet, dass** die Produkte (2) aus einer Produktaufnahme (10, 35) an die Hubeinrichtung (9) übergeben werden.

17. Verfahren nach einem der Ansprüche 13 - 16, **dadurch gekennzeichnet, dass** eine Entnahmevorrichtung an der Ober- und Unterseite (6, 8) des Stapels (3) zur Anlage gebracht wird und die Kraftbeaufschlagung auf die Seitenflächen (4) das Stapels (3) und die Kraftbeaufschlagung durch die Gegenhalteeinheit (7) zeitweilig aufgehoben wird.

## Claims

1. A device for stacking plate-like products into a straight, cylindrical stack having an upper and an underside and at least two lateral surfaces located at a distance from one another,
- comprising at least one traction mechanism (12) of a traction mechanism drive (5) that revolves between a lower and an upper deflection (13a, b), which can be brought to abut against each lateral surface (4) of the stack (3),
- wherein each traction mechanism drive (5) has a back stop which prevents a downward movement of the traction mechanism resting against the stack (3),
- comprising a lifting device (9) for at least one plate-like product (2) that can be moved in the direction of the underside (8) of the stack (3), which can be moved between a receiving position located below the lower deflection (13a) of each traction mechanism drive (5) and a delivery position (32) located above it, **characterised by** a movable counterholding unit (7) which can be brought to abut against the upper side (6) of the stack (3).

2. The device according to claim 1, **characterised in that** each traction mechanism drive (5) has support rollers (19) for the revolving traction mechanism (12).

3. The device according to claim 1 or 2, **characterised in that** each traction mechanism drive (5) has a conveyor belt (12) as the traction mechanism.

4. The device according to claim 1 or 2, **characterised in that** each traction mechanism drive (5) has a chain (33) as the traction mechanism.

5. The device according to any one of claims 1 to 4, **characterised in that** the counterholding unit (7) is weighted.

6. The device according to any one of claims 1 to 5, **characterised in that** the counterholding unit (7) is connected to a drive (25) at least for the application of force to the upper side (6) of the stack (3).

7. The device according to any one of claims 1 to 6, **characterised in that** at least each traction mechanism drive (5) on one of the two lateral surfaces (4) of the stack (3) is provided with means to develop a pressing force (15) of the traction mechanism (12) on the lateral surface (4) of the stack (3).

8. The device according to any one of claims 1 to 7, **characterised in that** at least each traction mechanism drive (5) on one of the two lateral surfaces (4) of the stack can be completely moved away from the stack (3).

9. The device according to any one of claims 1 to 8, **characterised in that** the counterholding unit (7) has a plate (23) with a recess (24) to engage an arm of an extraction device.

10. The device according to any one of claims 1 to 9, **characterised in that** the device (1) has guide means (18) to guide the stack (3) at least on its rear side.

11. The device according to any one of claims 1 to 10, **characterised in that** the guide means are configured as rods (18).

12. The device according to any one of claims 1 to 10, **characterised in that** the device comprises at least one locking element (38) which can rotate about an axis (39) having a stop face (40) which can be temporarily brought to abut against the underside (8) of the stack at the edge.

13. A method for stacking plate-like products (2) into a straight, cylindrical stack (3) having an upper and an underside and at least two lateral surfaces (4) located at a distance from one another, wherein the plate-like products (2) are lifted into a stack (3) in a stack nest from below against the force of gravity, **characterised in**
- **that** the products (2) are held in the stack nest by applying force at least to the lateral surfaces (4) of the stack (3) to prevent dropping in the direction of the force of gravity, wherein the application of force to the lateral surfaces (4) in the stack transverse to the direction of gravity produces a prestress which holds the stack (3) together even when adding additional products (2),
- and whilst maintaining the application of force, additional products (2) are added to the stack (3) in the stack nest from the underside by means of a lifting device (9).

14. The method according to claim 13, **characterised in that** force is applied to the stack (3) from its upper side (6) by a counterholding unit (7).

15. The method according to claim 13 or 14, **characterised in that** the products (2) are lifted into the stack nest by means of a lifting device (9).

16. The method according to any one of claims 13 to 15, **characterised in that** the products (2) are delivered to the lifting device (9) from a product receptacle (10, 35).

17. The method according to any one of claims 13-16, **characterised in that** an extraction device is brought to abut against the upper and underside (6, 8) of the stack (3), and the application of force to the lateral surfaces (4) of the stack (3) and the application of force by the counterholding unit (7) is temporarily suspended.

## Revendications

1. Dispositif pour empiler des produits de type lamelles en une pile cylindrique droite, avec une face supérieure et une face inférieure et avec au moins deux surfaces latérales disposées avec un écart mutuel,
- avec au moins un moyen de traction (12) d'un mécanisme d'entraînement (5) à moyens de traction pouvant être mis en appui sur chaque surface latérale (4) de la pile (3), circulant en périphérie entre un dispositif de renvoi (13 a, b) inférieur et supérieur,
- chaque mécanisme d'entraînement (5) à moyens de traction comportant un antiretour qui empêche un déplacement vers le bas du moyen de traction appuyé sur la pile (3),
- avec un système de levage (9) déplaçable en direction de la face inférieure (8) de la pile (3) pour au moins un produit de type lamelle (2) qui est déplaçable entre la position de reprise située en-dessous du dispositif de renvoi (13a) inférieur de chaque mécanisme d'entraînement (5) à moyens de traction et une position de transfert (32) située au-dessus de cette dernière,
**caractérisé par** une unité de butée (7) mobile, pouvant être mise en appui sur la face supérieure (6) de la pile (3.

2. Dispositif selon la revendication 1, **caractérisé en ce que** chaque mécanisme d'entraînement (5) à moyens de traction (5) comporte des galets d'appui (19) pour le moyen de traction (12) tournant.

3. Dispositif selon la revendication 1 ou la revendication 2, **caractérisé en ce que** chaque mécanisme d'entraînement (5) à moyens de traction comporte en tant que moyen de traction une bande de transport (12).

4. Dispositif selon la revendication 1 ou la revendication 2, **caractérisé en ce que** chaque mécanisme d'entraînement (5) à moyens de traction comporte en tant que moyen de traction une chaîne (33) .

5. Dispositif selon l'une quelconque des revendications 1 à 4, **caractérisé en ce que** l'unité de butée (7) est chargée par un poids.

6. Dispositif selon l'une quelconque des revendications précédentes, **caractérisé en ce que** l'unité de butée (7) est reliée à un entraînement (25) pour soumettre à une force au moins la face supérieure (6) de la pile.

7. Dispositif selon l'une quelconque des revendications 1 à 6, **caractérisé en ce qu'**au moins chaque mécanisme d'entraînement (5) à moyens de traction est muni sur l'une des deux surfaces latérales (4) de la pile (3) de moyens pour la création d'une force de pression (15) du moyen de traction (12) sur la surface latérale (4) de la pile (3).

8. Dispositif selon l'une quelconque des revendications 1 à 7, caractérisé en qu'au moins qu'au moins chaque mécanisme d'entraînement (5) à moyens de traction peut être complètement retiré de la pile (3) sur l'une des deux surfaces latérales (4) de la pile (3).

9. Dispositif selon l'une quelconque des revendications 1 à 8, **caractérisé en ce que** l'unité de butée (7) comporte une plaque (23) avec un évidement (24) pour l'engagement d'un bras d'un dispositif de retrait.

10. Dispositif selon l'une quelconque des revendications 1 à 9, **caractérisé en ce que** le dispositif (1) comporte des moyens de guidage (18) pour guider la pile (3) sur sa face arrière.

11. Dispositif selon l'une quelconque des revendications 1 à 10, **caractérisé en ce que** les moyens de guidage sont conçus en tant que barres (18).

12. Dispositif selon l'une quelconque des revendications 1 à 10, **caractérisé en ce que** le dispositif comporte au moins un élément de blocage (38) avec une surface de butée (40), rotatif autour d'un axe (39) qui peut être amené temporairement en appui par son bord sur la face inférieure (8) de la pile.

13. Procédé destiné à empiler des produits (2) du type de lamelles en une pile (3) cylindrique droite, avec une face supérieure et une face inférieure et avec au moins deux surfaces latérales disposées avec un écart mutuel, les produits (2) du type lamelles étant soulevés du bas vers le haut, à l'encontre de la force de gravité en une pile (3) dans une cavité à piles, **caractérisé en ce que**
- au moins sur les surfaces latérales (4) de la pile (3), les produits (2) sont maintenus dans la cavité à piles par application d'une force contre un affaissement en direction de la force de gravité, l'application d'une force sur les surfaces latérales (4) générant dans la pile, à la transversale de la direction de la force de gravité une précontrainte qui maintient la pile (3) en cohésion, même lorsque des produits (2) supplémentaires sont rajoutés,
- et sous conservation de l'application de force, des produits (2) supplémentaires étant rajoutés par la face inférieure de la pile (3) dans la cavité à piles au moyen d'un dispositif de levage (9) .

14. Procédé selon la revendication 13, **caractérisé en ce que** la pile (3) est soumise à une force à partir de sa face supérieure (6) à l'aide d'une unité de butée (7).

15. Procédé selon la revendication 13 ou la revendication 14, **caractérisé en ce que** les produits (2) sont soulevés dans la cavité à piles au moyen d'un système de levage (9).

16. Procédé selon l'une quelconque des revendications 13 à 15, **caractérisé en ce que** les produits (2) sont transférés au système de levage (9) à partir d'un receveur de produits (10, 35).

17. Procédé selon l'une quelconque des revendications 13 à 16, **caractérisé en ce que** le dispositif de prélèvement est amené en appui sur la face supérieure et sur la face inférieure (6, 8) de la pile (3) et l'application de la force sur les surfaces latérales (4) de la pile (3) et l'application de la force par l'unité de butée (7) est temporairement supprimée.
